# EUROPEAN PATENT SPECIFICATION

(11) **EP 3 435 683 B1**
(45) Date of publication and mention of the grant of the patent: **08.04.2020**
(21) Application number: 17183547.3
(22) Date of filing: 27.07.2017
(51) Int. Cl.: H04R 5/02, H04N 5/64, H04R 1/02

(54) **AUDIO SYSTEM, A TELEVISION COMPRISING THE AUDIO SYSTEM AND A METHOD FOR GENERATING AN AUDIO DEPTH EFFECT**
AUDIOSYSTEM, FERNSEHAPPARAT MIT DEM AUDIOSYSTEM UND VERFAHREN ZUR ERZEUGUNG EINES AUDIOTIEFENEFFEKTS
SYSTÈME AUDIO, TÉLÉVISION COMPRENANT LE SYSTÈME AUDIO ET PROCÉDÉ PERMETTANT DE GÉNÉRER UN EFFET DE PROFONDEUR AUDIO

(43) Date of publication of application: 30.01.2019
(73) Proprietor: Vestel Elektronik Sanayi ve Ticaret A.S., 45030 Manisa (TR)
(72) Inventor: SARIARSLAN, Muhammet Kürsat, 45030 Manisa (TR); AKGÜL, Burak, 45030 Manisa (TR)
(74) Representative: Ascherl, Andreas

(56) References cited:
- US-A- 4 410 761
- US-A1- 2007 104 341
- US-A1- 2011 293 122

## Description

This invention refers to a surround audio system according to claim 1, and a television having the surround audio system according to the claim 7, and a method for generating an audio depth effect according to the claim 8.

### Background of the Invention

To get a real audio depth effect, regular surround systems have many speakers for the right channel, and also many speakers for the left channel. However, television adaptation for these type of surround systems are mostly two main speakers and a subwoofer. To get a real audio depth effect, a television user is required to use external audio solutions. However, it becomes generally inconvenient for television users to shift the externally connected speakers in case of cleaning of external surroundings cleaning, or in case of any other exigencies. May times, even the connections between the television and the external speakers gets faulty, because of a mishandling of the connections manually.

Chinese Patent Publication No. CN203399244 discloses a casing-speaker integrated structure for an ultrathin narrow-frame television. The casing-speaker integrated structure comprises a television rear shell. At least one semi-sealed casing having a sound-making surface is formed on the rear shell through integrated injection moulding. A cover plate and a loudspeaker which are matched with the sound-making surface in size are arranged correspondingly to each semi-sealed casing. Each cover plate is provided with plural sound-making holes and can be detachably fixed at one side of the sound-making surface of the semi-sealed casing. The cover plates and the semi-sealed casings surround to form an approximately-sealed audio mixing cavity having plural sound-making holes. The loudspeakers are positioned in the audio mixing cavity, cones of the loudspeakers are oriented to the sound-making holes, end surfaces of the cones of the loudspeakers facing the sound-making holes form annular flangings, and when the cover plates and the semi-sealed casings are fixedly connected, the flangings are tightly attached on the cover plates to surround the plural sound-making holes. The casing-speaker integrated structure can greatly improve the sound effect of the ultrathin narrow-frame television, reduce the complexity of a sound system, and prevent vibration influences of casing-speaker integration on the television. The solution provided by the prior art provides for sound system for television to be compact, however, integration of the speakers still does not substantially reduce the size of the whole television set.

Japanese Patent Publication No. JP2014195166 discloses a display device includes a display part, a stand part which is installed on a floor surface and supports the display part, and a woofer. The display part is integrated with the stand part. The woofer is disposed in the stand part so that a sound emission direction is set to a downward direction. A sound emission port for the woofer is provided on a rear surface of the stand part. This prior art even though provides of some level of compactness, however, still the whole system of display device, woofer and stand is bulky, also it does not provide for a proper surround system to generate an audio depth effect.

US Patent Publication No. US2009097691 discloses an integrated speaker and display that includes a display and a speaker assembly. The display is substantially integrated within the speaker assembly. The display is embedded between a coil of the speaker assembly and/or magnets of the speaker assembly. The speaker assembly may include a diaphragm located either on a side of the display facing a viewer of the display or opposite a side of the display facing a viewer of the display. The electronic device may be any type of device, for example, a mobile phone, a personal digital assistant (PDA), an electronic game, a computer, an audio player, a video player, a television, or a display device. The display may be any type of display, for example, a liquid crystal display (LCD), a digital light processing (DLP) display, a light-emitting diode display (LED), or a plasma display. It is to be noted that in this prior art, the display is integrated within the speaker assembly, which means to make the things compact, they may have to reduce size of the screen. However, due to the space taken by the speaker is not substantially reduced, which still makes the integrated assembly bulky.

US Patent Publication No. US4410761 relates to a television system having a stereo loudspeaker system with a plurality of speakers and delay circuitry for successively delaying the left and right signals so that the speaker at the right end of the speaker arrangement receives the least delayed right signal and the most delayed left signal and the speaker at the left end of the speaker arrangement receives the least delayed left signal and the most delayed right signal.

US Patent Publication No. US2007104341 mentions an image display device for displaying images which includes an image display unit for displaying images, an audio output unit for outputting audio from multiple positions corresponding to the images displayed by the image display unit, and an audio output position control unit for analyzing the images, controlling the audio output unit according to content of the images, and selecting the position from which to output audio.

US Patent Publication No. US2011293122 discloses a display system, display control method and computer program for effectively outputting sound with plural display apparatuses in a two dimensional array. A control apparatus 2 is connected to a two dimensional array display apparatus unit made with display apparatuses 1, configuring a multivision system. A controlling unit 20 of the control apparatus 2 obtains position information for the display apparatus unit in the two dimensional array. Based on the position of each display apparatus 1 in the two dimensional array display apparatus unit, the controlling unit 20 decides the presence or absence of output sound and selects the channel for the output sound.

### Object of the Invention

It is therefore the object of the present invention is to provide an compact surround audio system, which produces an audio depth effect.

### Description of the Invention

The before mentioned object is solved by a surround audio system according to claim 1, and a television comprising the surround audio system according to the claim 7, and a method for generating an audio depth effect according to the claim 8.

A surround audio system for producing an audio depth effect, the surround audio system comprising a signal generator adapted to generate an excitation signal for one or more particular transducers, and adapted to further transmit the excitation signal, a set of transducers placed on a housing of the audio system, wherein each of the transducer are placed as a part of two audio channels, a right audio channel, and a left audio channel, the one or more transducers for which the excitation signal is generated is adapted to receive the excitation signal and to generate sound with audio depth effect.

This provides a mechanism for reducing the speaker space and providing sound generation as part of housing itself. Also, the transducers for left and right audio channel provides an audio depth effect for the sound generated by the transducers.

According to the invention, the surround audio system comprises a heating module for heating the housing of the audio system based on a frequency of the sound is to be generated.

This embodiment is beneficial as it provides possibility to make the material of cover more flexible and accomodating to handle generation of sound more effectively, and especially the low frequency sound.

According to the invention, the heating module is adapted to heat an area of the housing of the audio system which is in proximity of the transducer required to be excited by the excitation signal.

This embodiment is helpful, as it provides for an implimentation which helps in saving heat energy to only heat up the area required, as well as it shall help in longetivity of the housing material, as the housing parts are selectively heated.

According to the invention, the heating module comprises a set of heating elements, such that each of the heating elements are placed in proximity to each of the transducers.

This embodiment is beneficial as it provides for a simple implimentation of heating elements, and further support in selective heating of the parts of the housing which are relevant with respect to producing of sound by a particular transducer.

According to the invention, the audio surround system comprises a frequency identifier adapted to identify the frequency of the sound to be generated, and based on the frequency of the sound sends an actuating signal to the heating module for heating the housing of the audio system.

This embodiment is helpful, as it provides for automated identification of the frequencies for which the heating of the housing shall be required.

According to the invention, the set of transducers are placed on backs side of the housing of the surround audio system.

This embodiment is beneficial, as it provides for a simple placement of the transducers on the housing. Placing on the back side of the housing shall help to keep the surround audio system compact, as placement on back side may nominally increase the width of the housing which is not quite visible or felt to be voluminous by the user. While placement on other parts of the housing may unnecessary increase other dimensions of the housing, which may be appear to be voluminous. Moreover, placement of transducers on the back side shall help in better production of audio depth effect.

According to the invention, the surround audio system comprises a superimposition determination unit adapted to determine a degree of superimposition required for left audio channel and right audio channel, and based on degree of superimposition, the superimposition determination unit is adapted to control the signal generator to generate the excitation signal for the left and right transducers appropriate to generate the determined degree of superimposition of the sound signal.

This embodiment is beneficial, as it provides for an automated system to identify the degree of superimposition required to be produced by the surround audio system.

Further preferred embodiments are subject-matter of dependent claims and/or of the following specification parts.

According to another embodiment of the surround audio system, if the frequency of the sound to be produced is identified to be a low frequency, then the frequency identifier is adapted to send the actuating signal to the heating module.

This embodiment is beneficial, as it provides a way for starting up the heating of the housing of the surround audio system.

According to a further embodiment of the surround audio system, when the frequency identifier identifies the frequency of the sound subsequently to be generated is a high frequency, the frequency identifier sends a control signal to the heating module to switch off the heating module.

This embodiment is beneficial, as it provides a way to handle the heating module when the frequency of the sound to be produced changes to a high frequency. When the frequency of the sound to be produced is high, the sound generation is not diluted and is having its perseverance substantially, hence during that time the heating module can be switched off to increase longevity of the housing, and to save the energy.

According to another embodiment of the surround audio system, the set of transducers comprises a pair of left transducer and right transducer placed in close proximity to each other at or in proximity to center of the back side of the housing of the surround audio system.

This embodiment is beneficial, as it provides for placement of the transducers for more mono signals or more superimposed sound.

According to a further embodiment of the surround audio system, the set of transducers comprises more than one pair of left transducers and right transducers, the left transducers are placed on or in proximity to lines running from left corners to center of the back side of the housing and the right transducers are placed on or in proximity to lines running from right corners to center of the back side of the housing, wherein the transducers are symmetrically placed.

This embodiment is beneficial, as it provides for placement of the transducers for varying degree of superimposition.

According to a further preferred embodiment of the system, the set of transducers comprises four pairs of left and right transducers, two pairs of left and right transducers are placed on or in proximity of the corners of the back side of the housing of the surround audio system, and remaining two pairs of left and right transducers are arranged such that left transducers are placed on or in proximity to middle of lines running from left corners to center of the back side of the housing and right transducers are placed on or in proximity to middle of lines running from right corners to center of the back side of the housing.

This embodiment is beneficial, as it provides for simple placement for transducers with requirements to produce stereo sound with most degree of superimposition, as well as a bit lesser degree of superimposition.

The before mentioned object is also solved by a television of claim 7, the television comprising the audio system according to any of the claims 1 to 6, wherein the housing of the television is having the transducers placed onto it.

The before mentioned object is also solved by a method for generating an audio depth effect by an audio surround system according to claim 8. The audio surround system comprises a set of transducers placed on a housing of the audio system, each of the transducer are placed to form two audio channels, a right audio channel, and a left audio channel. The method comprising of
- determining a degree of superimposition required for left audio channel and right audio channel by a superimposition determination unit to produce sound with the audio depth effect,
- controlling a signal generator unit by the superimposition determination unit for generation of an excitation signal for the transducers appropriate to generate the determined degree of superimposition of the sound signal,
- generating and transmitting of the excitation signal to the particular transducer by the signal generator, and
- receiving the excitation signal by the particular transducers and generating of the sound with the determined degree of superimposition to produce the audio depth effect.

According to the invention, the method comprising of
- identifying of frequency of the sound to be generated by a frequency identifier,
- based on the frequency of the sound signal, generating an actuating signal by the frequency identifier, and sending the actuating signal to a heating module, and
- receiving the actuating signal by the heating module and heating the housing of the audio system.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 illustrates a schematic diagram of a surround audio system according to one embodiment of the invention.
Fig. 2 illustrates back cover of the surround audio system having placement of transducers according to an embodiment of the invention.
Fig. 3 illustrates a flowchart of a method for producing audio depth effect from the surround audio system according to an embodiment of the invention.

### Detailed Description of the Drawings

The present invention focuses on providing a compact audio system, or a television, which encompasses the compact audio system which can produce sound with an audio depth effect with varying degree of superimposition. This helps to provide stereo type effect in the compact audio system, which do not require voluminous inbuild audio speakers or external audio speaker.

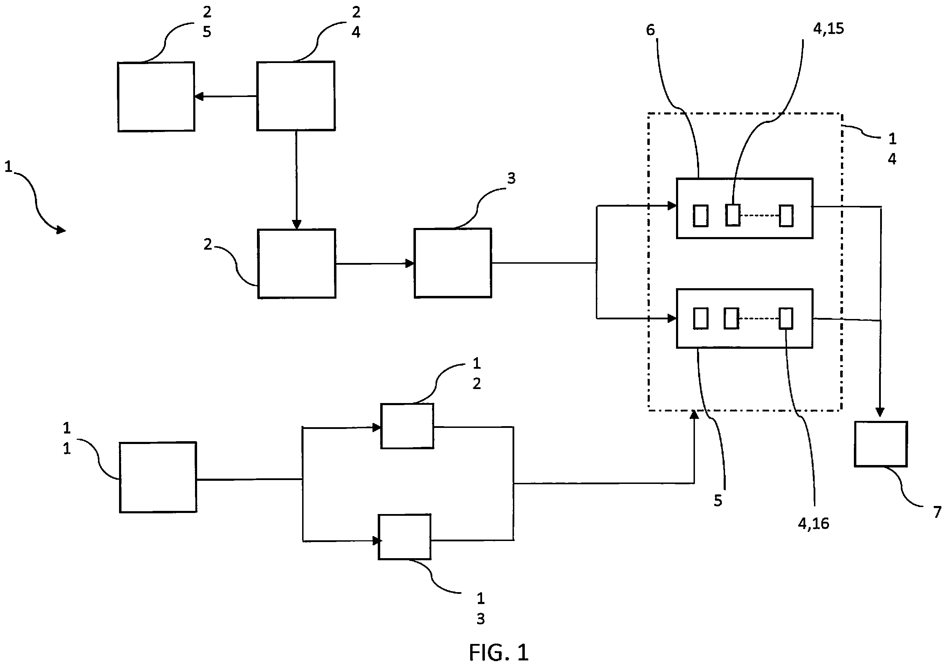

Fig. 1 illustrates a schematic diagram of a surround audio system 1 according to one exemplary embodiment of the invention. The surround audio system 1 includes a superimposition determination unit 24, a signal generator 2, a frequency identifier 11, a heating module 8, a set of transducers 4 placed as part of a right audio channel 5, and left audio channel 6.

The superimposition determination unit 24 is adapted to process an audio signal which is to be played as the sound 7, and determines a degree of superimposition 25 required for the left audio channel 6 and the right audio channel 5. Once the degree of superimposition 25 is determined, the superimposition determination unit 24 controls the signal generator 2 to generate an excitation signal 3 for the left transducers 15 and right transducers 16 appropriate to generate the determined degree of superimposition of a sound 7. In one embodiment, the superimposition determination unit 24 is not required, rather the signal generator 2 can also be manually handled and the user can use his judgement to identify which transducers 4, 15, 16 are to be used, and accordingly can control the signal generator 2 to generate the excitation signal 3 for those specific transducers 4, 15, 16.

The signal generator 2 generates the excitation signal 3 and transmit to the set of transducers 4, 15, 16 appropriately, so that those transducers 4, 15, 16 are excited in left audio channel 6 and right audio channel 7 which are required to generate the sound 7 with the audio depth effect.

The frequency identifier 11 processes the audio signal which is to be played as the sound 7, and identifies a frequency of the sound 7 to be generated, and based on frequency identification, it sends an actuating signal 12 to the heating module 8 for switching on. Once heating module 8 is switched on, it heats up the housing. Heating up the housing helps in making the material of housing flexible which further supports in generating of the sound 7 with precise and required frequency. In one embodiment, the heating module 8 heats specific area of the housing which is in proximity of the transducer 4, 15, 16 required to be excited for generating the sound 7. In one embodiment, the heating module 8 includes various heating elements 10, such that, each element 10 is placed in proximity to each of the transducers 4, 15, 16, so that targeted area of heating can be easily implemented. In one embodiment, the frequency identifier 11 is not required, rather the actuating of the heating module 8 can be manually performed by the user applying his judgement.

Once the heating module 8 is determined to be not required, based on the identified frequency, the frequency identifier 11 generates a control signal 13 for switching off the heating module 8

In one implementation of the frequency identifier 11, the frequency identifier 11 sends the actuating signal 12 to the heating module 8 only when the frequency identified to be less than a threshold. On lower frequencies, the rigid material is ineffective in producing the sound. Heating of these material makes them flexible enough to effectuate the generating of sound of low frequencies. Hence, the threshold at which the actuating signal 12 has to be generated substantially depends on the material of the housing of the surround audio system 1. The threshold can be changed according to specific surround audio system 1 based on the material of the housing used. There may be a mechanism provided to easily set that threshold by the user of the surround audio system 1 himself. When the frequency identifier 11 identifies the frequency of the sound 7 subsequently to be generated is a high frequency, the frequency identifier 11 sends a control signal 13 to the heating module 8 to switch off the heating module 8. In an alternate embodiment, the switching off of the heating module 8 need not be automatic through the use of frequency identifier 11, rather the switching off of the heating module 8 can be manually performed.

In one embodiment, a mechanism can also be provided to user to vary the intensity of the heat required for heating the housing of the surround audio system 1. This shall really provide a control at the user hand for a situation where the physical property of the material has substantially changed during usage for long time, and the automatic heating of the heating module 8 is not substantially effective to help in providing a perseverance to qualitative playing of the sound.

In another embodiment, the heating module 8 is not provided, specifically in those case where the material of the housing on which the transducers 4 are to be placed is flexible enough to handle production of sound precisely for a wide frequency range.

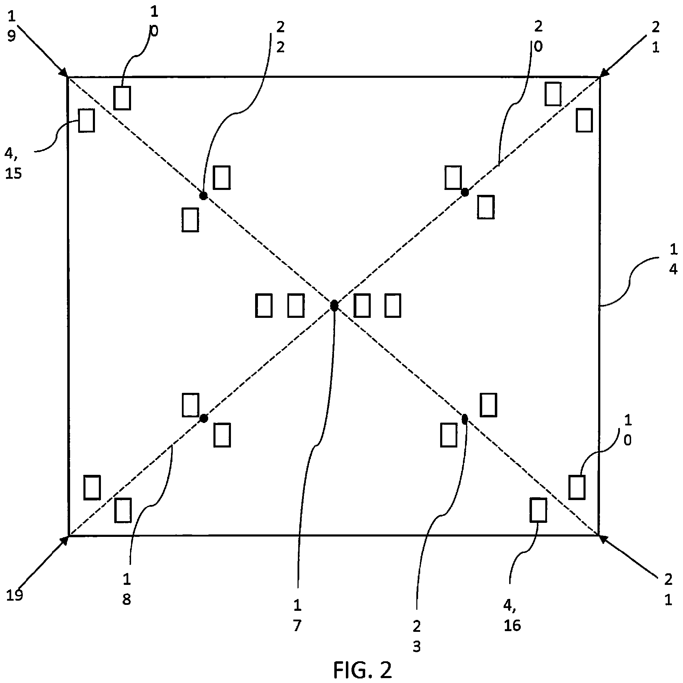

Fig. 2 illustrates a back side 14 of the housing of the surround audio system having placement of transducers 4, 15, 16. The back side 14 is shown to be having five pairs of the left transducers 6, and the right transducers 5.

One pair of the transducers 4, 15, 16 is placed around the center 17 of the back side 14 of the housing of the surround audio system. This pair of transducers 4, 15, 16 helps in getting more superimposed sound of left and right audio channel, which is almost mono sound.

There are two pairs of left transducers 15, and the right transducers 16 placed at corners 19, 21 of the back side 17 of the housing of the surround audio system. The left transducers 15 are placed on the left corner 19 of the back side 17 of the audio surround system, and the right transducers 16 are placed onto the right corners 21 of the back side 17 of the housing of the surround audio system. These pair of the transducers 4, 15, 16 helps to provide the sound which is having minimal superimposition of left and right audio channel, and provide for a more stereo flavor of the sound. In one of the embodiment, the transducers 4, 15, 16 placed at the corners 19, 21, are not required, rather the transducers 4, 15, 16 can be placed more near to the middle 22, 23 of the lines 18, 20, which are running from the corners 19, 21 to the center 17, where such level of stereo sound production is no desired.

The final two pairs of the left transducers 15, and the right transducers 16 are placed near to a middle 22, 23 of lines 18, 20 running from corners 19, 21 to the center 17 of the back side of the housing of the surround audio system. The left transducers 15 are placed near to the middle 22 of lines 18 running from left corners 19 to the center 17 of the back side 14 of the housing and the right transducers 16 are placed near to a middle 23 of the lines 20 running from right corners 21 to the center 17 of the back side 14 of the housing. These transducers 4, 15, 16 provides for a different degree of the superimposition of the left and right audio channel and somewhere in between to the degree of superimposition provided by the pairs of transducers 4, 15, 16 placed near to the corners 19, 21, and the pair of transducers 4, 15, 16 placed near to the center 17 of the back side 14 of the housing of the surround audio system. In one of the embodiment, these transducers 4, 15, 16 need not be placed at middle 22, 23 of the lines 18, 20 running from the corners 19, 21, to the center 17, rather the transducers 4, 15, 16 can be placed at any other place onto the back side 14 of the housing of the surround audio system.

Each of the transducers 4, 15, 16 is further paired with heating elements 10, so that whenever an area in proximity to the transducers 4, 15, 16 are required to be heated for handling a particular frequency range sound generation, that specific heating element 10 can be activated.

It is to be noted that any other placement of transducers 4, 15, 16 can be followed in spite of the one which is provided in the Fig 2, however, it is preferred that the left transducers 15, and the right transducers 16 are symmetrically placed, so as to provide a qualitative sound generation.

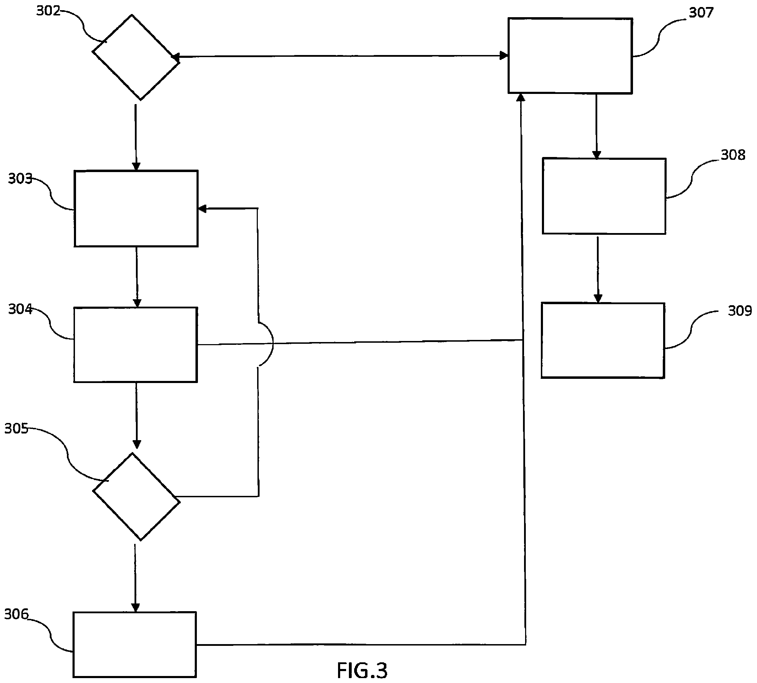

Fig. 3 illustrates a flowchart of a method for producing audio depth effect from a surround audio system according to an embodiment of the invention. The audio surround system includes a set of transducers placed on a housing of the surround audio system, each of the transducer are placed to form two audio channels, a right audio channel, and a left audio channel. In step 302, a frequency identifier identifies a frequency of the sound is to be generated and determine, if the frequency is low than in step 303, sending an actuating signal to the heating module for heating the housing of the surround audio system, more specifically the area of the housing is to be heated which is around the transducer required to be excited. If in case the frequency is determined to be higher, the step 307 is performed. In step 304, the heating module receives the actuating signal and heats the housing of the surround audio system. After heating the surround audio system, step 307 is performed. In step 305, the frequency identifier further determines if a subsequent sound to be produced has a high frequency, it sends a control signal to the heating module, and in step 306, the heating module receives the control signal and switches off the heating module. In step 307, a degree of superimposition required for left audio channel and right audio channel is determined by a superimposition determination unit to produce a sound with the audio depth effect. Thereafter, in step 308, the superimposition determination unit controls a signal generator unit for generation of an excitation signal for the transducers appropriate to generate the determined degree of superimposition of the sound. The signal generator generates and transmits the excitation signal to the particular transducer/s. In step 309, the transducer/s receives the excitation signal and generates of the sound the determined degree of superimposition to produce the audio depth effect. It is to be noted that steps 302 to 306 are optional, and in an embodiment, where the heating module is not required, are not included.

Thus, the present invention provides for a surround audio system 1 for producing an audio depth effect, the surround audio system 1 includes a signal generator 2 which generates an excitation signal 3 for one or more transducers 4, and further transmits the excitation signal 3, and the set of transducers 4 is placed on a housing of the audio system 1. Each of the transducer 4 is placed as a part of two audio channels 5, 6, a right audio channel 5, and a left audio channel 6, wherein the one or more transducers 4 for which the excitation signal 3 is generated is adapted to receive the excitation signal 3 and to generate sound 7 with audio depth effect.

### List of reference numbers

- 1: surround audio system
- 2: signal generator
- 3: excitation signal
- 5: right audio channel
- 6: left audio channel
- 7: sound
- 8: heating module
- 10: heating elements
- 11: frequency identifier
- 12: actuating signal
- 13: control signal
- 14: back side of the surround audio system
- 15: left transducer
- 16: right transducer
- 17: center of the back side of the housing
- 18: lines running from left corners to the center of the back side of the housing
- 19: left corners
- 20: lines running from right corners to the center of the back side of the housing
- 21: right corners
- 22: middle of lines running from the left corners to the center
- 23: middle of lines running from the right corners to the center
- 24: superimposition determination unit
- 25: degree of superimposition

## Claims

1. A surround audio system (1) for producing an audio depth effect, the surround audio system (1) comprising:
- a signal generator (2) adapted to generate an excitation signal (3) for a set of transducers (4), and adapted to further transmit the excitation signal (3); and
- the set of transducers (4) placed on a housing of the audio system (1), wherein the set of transducers is placed to form two audio channels (5, 6), a right audio channel (5) and a left audio channel (6), wherein the transducers (4) for which the excitation signal (3) is generated are adapted to receive the excitation signal (3) and to generate sound (7) with the audio depth effect,
- a superimposition determination unit (24) adapted to determine a degree of superimposition (25) required for the left audio channel (6) and the right audio channel (5), and based on the degree of superimposition (25), the superimposition determination unit (24) is adapted to control the signal generator (2) to generate the excitation signal (3) for the set of transducers appropriate to generate the determined degree of superimposition of the sound, the surround audio system being further adapted for:
- controlling the signal generator unit (2) by the superimposition determination unit (24) for generation of the excitation signal (3) for the set of transducers (4) appropriate to generate the determined degree of superimposition of the sound (7)
- generating and transmitting of the excitation signal (3) to the set of transducers by the signal generator (2), and
- receiving the excitation signal (3) by the set of transducers and generating of the sound (7) with the determined degree of superimposition to produce the audio depth effect,
**characterized by** the surround audio system further comprising:
- a heating module (8) for heating the housing of the surround audio system (1) based on a frequency of the sound to be generated,
wherein the heating module (8) is adapted to heat an area (9) of the housing of the surround audio system (1) which is in proximity of the set of transducers required to be excited by the excitation signal (3),
wherein the heating module (8) comprises a set of heating elements (10), such that each of the heating elements (10) are placed in proximity to each of the transducers from the set of transducers (4),
wherein the surround audio system (1) further comprises a frequency identifier (11) adapted to identify a frequency of the sound (7) to be generated, and based on the frequency of the sound sending an actuating signal (12) to the heating module (8) for heating the housing of the surround audio system (1),
and wherein the set of transducers (4) are placed on a back side (14) of the housing of the surround audio system (1).

2. The surround audio system (1) according the claim 1, wherein if the frequency of the sound (7) to be produced is identified to be a low frequency, then the frequency identifier (11) is adapted to send the actuating signal (12) to the heating module (8).

3. The surround audio system (1) according to claim 1 or 2, wherein when the frequency identifier (11) identifies that the frequency of the sound (7) subsequently to be generated is a high frequency, the frequency identifier (11) is adapted to send a control signal (13) to the heating module (8) to switch off the heating module (8).

4. The surround audio system (1) according to claim 1, wherein the set of transducers (4) comprises a pair of left transducer (15) and right transducer (16) placed in close proximity to each other at or in proximity to a center (17) of the back side (14) of the housing of the surround audio system (1).

5. The surround audio system (1) according to any of the claim 1 or 4, wherein the set of transducers (4) comprises more than one pair of left transducers (15) and right transducers (16), the left transducers (15) are placed on or in proximity to lines (18) running from left corners (19) to the center (17) of the back side (14) of the housing and the right transducers (16) are placed on or in proximity to lines (20) running from right corners (21) to the center (17) of the back side (14) of the housing, wherein the transducers (4, 15, 16) are symmetrically placed.

6. The surround audio system (1) according to the claim 5, wherein the set of transducers (4) comprises four pairs of left transducers (15) and right transducers (16), two pairs of left transducers (15) and right transducers (16) are placed on or in proximity of the corners (19, 21) of the back side (14) of the housing of the surround audio system (1), and remaining two pairs of left transducers (15) and right transducers (16) are arranged such that the left transducers (15) are placed on or in proximity to a middle (22) of lines (18) running from left corners (19) to the center (17) of the back side (14) of the housing and the right transducers (16) are placed on or in proximity to a middle (23) of the lines (20) running from right corners (21) to the center (17) of the back side (14) of the housing.

7. A television comprising the surround audio system (1) according to any of the claims 1 to 6, wherein the housing of the television is having the transducers (4) placed onto it.

8. A method for generating an audio depth effect by an audio surround system (1), wherein the audio surround system (1) comprises a set of transducers (4) placed on a housing of the surround audio system (1), the set of transducers being placed to form two audio channels (5, 6), a right audio channel (5), and a left audio channel (6), the method comprising:
- determining a degree of superimposition (25) required for the left audio channel (6) and the right audio channel (5) by a superimposition determination unit (24) to produce a sound (7) with the audio depth effect;
- controlling a signal generator unit (2) by the superimposition determination unit (24) for generation of an excitation signal (3) for the set of transducers (4) appropriate to generate the determined degree of superimposition of the sound (7);
- generating and transmitting of the excitation signal (3) to the set of transducers (4) by the signal generator (2); and
- receiving the excitation signal (3) by the set of transducers (4) and generating of the sound (7) with the determined degree of superimposition to produce the audio depth effect **characterized by**
- identifying of frequency of the sound (7) to be generated by a frequency identifier (11);
- based on the frequency of the sound (7), generating an actuating signal (12) by the frequency identifier (11), and sending the actuating signal (12) to a heating module (8); and
- receiving the actuating signal (12) by the heating module (8) and heating the housing of the surround audio system (1), wherein the set of transducers (4) are placed on a back side (14) of the housing of the surround audio system,
the heating module comprises a set of heating elements (10), such that each of the heating elements are placed in proximity to each of the transducers from the set of transducers, and
the heating module is adapted to heat an area (9) of the housing which is in proximity of the set of transducers required to be excited by the excitation signal.

## Patentansprüche

1. Ein Surround-Audiosystem (1) zur Erzeugung eines Audio-Tiefeneffekts, wobei das Surround-Audiosystem (1) Folgendes umfasst:
- einen Signalgenerator (2), der geeignet ist, ein Anregungssignal (3) für einen Satz von Wandlern (4) zu erzeugen, und der geeignet ist, das Anregungssignal (3) weiter zu übertragen; und
- der Satz von Wandlern (4), der an einem Gehäuse des Audiosystems (1) angeordnet ist, wobei der Satz von Wandlern so angeordnet ist, dass er zwei Audiokanäle (5, 6) bildet, einen rechten Audiokanal (5) und einen linken Audiokanal (6), wobei die Wandler (4), für die das Anregungssignal (3) erzeugt wird, so angepasst sind, dass sie das Anregungssignal (3) empfangen und Schall (7) mit dem Audiotiefeneffekt erzeugen,
- eine Überlagerungsbestimmungseinheit (24), die dazu geeignet ist, einen Überlagerungsgrad (25) zu bestimmen, der für den linken Audiokanal (6) und den rechten Audiokanal (5) erforderlich ist, und wobei die Überlagerungsbestimmungseinheit (24) dazu geeignet ist, den Signalgenerator (2) zu steuern, um das Anregungssignal (3) für den Satz von Wandlern zu erzeugen, der zur Erzeugung des bestimmten Überlagerungsgrades des Tons geeignet ist, wobei
das Surround-Audiosystem ferner angepasst wird:
- die Steuerung der Signalgeneratoreinheit (2) durch die Überlagerungsbestimmungseinheit (24) zur Erzeugung des Anregungssignals (3) für den Satz von Wandlern (4), der geeignet ist, den bestimmten Überlagerungsgrad des Tons (7) zu erzeugen,
- Erzeugen und Übertragen des Anregungssignals (3) an den Satz von Wandlern durch den Signalgenerator (2), und
- Empfang des Anregungssignals (3) durch einen Satz von Wandlern und Erzeugung des Tons (7) mit dem festgelegten Überlagerungsgrad, um den Audio-Tiefeneffekt zu erzeugen,
**dadurch gekennzeichnet, dass** das Surround-Audiosystem ferner Folgendes umfasst:
- ein Heizmodul (8) zum Beheizen des Gehäuses des Surround-Audiosystems (1) auf der Grundlage einer Frequenz des zu erzeugenden Tons,
wobei das Heizmodul (8) dazu geeignet ist, einen Bereich (9) des Gehäuses des Surround-Audiosystems (1) zu erwärmen, der sich in der Nähe des Satzes von Wandlern befindet, die durch das Anregungssignal (3) angeregt werden sollen,
wobei das Heizmodul (8) einen Satz von Heizelementen (10) umfasst, so dass jedes der Heizelemente (10) in der Nähe jedes der Wandler aus dem Satz von Wandlern (4) angeordnet ist,
wobei das Surround-Audiosystem (1) ferner eine Frequenzkennung (11) aufweist, die geeignet ist, eine Frequenz des zu erzeugenden Tons (7) zu identifizieren, und die basierend auf der Frequenz des Tons ein Betätigungssignal (12) an das Heizmodul (8) zum Beheizen des Gehäuses des Surround-Audiosystems (1) sendet,
und wobei der Satz von Wandlern (4) auf einer Rückseite (14) des Gehäuses des Surround-Audiosystems (1) angeordnet ist.

2. Surround-Audiosystem (1) nach Anspruch 1, wobei, wenn die Frequenz des zu erzeugenden Schalls (7) als eine niedrige Frequenz identifiziert wird, die Frequenzkennung (11) so angepasst ist, dass sie das Betätigungssignal (12) an das Heizmodul (8) sendet.

3. Surround-Audiosystem (1) nach Anspruch 1 oder 2, wobei, wenn die Frequenzkennung (11) identifiziert, dass die Frequenz des anschließend zu erzeugenden Schalls (7) eine hohe Frequenz ist, die Frequenzkennung (11) so angepasst ist, dass sie ein Steuersignal (13) an das Heizmodul (8) sendet, um das Heizmodul (8) auszuschalten.

4. Surround-Audiosystem (1) nach Anspruch 1, wobei der Satz von Wandlern (4) ein Paar aus einem linken Wandler (15) und einem rechten Wandler (16) umfasst, die in unmittelbarer Nähe zueinander an oder in der Nähe eines Zentrums (17) der Rückseite (14) des Gehäuses des Surround-Audiosystems (1) angeordnet sind.

5. Surround-Audiosystem (1) nach einem der Ansprüche 1 oder 4, wobei der Satz von Wandlern (4) mehr als ein Paar von linken Wandlern (15) und rechten Wandlern (16) umfasst, die linken Wandler (15) auf oder in der Nähe von Linien (18) angeordnet sind, die von linken Ecken (19) zur Mitte (17) der Rückseite (14) des Gehäuses verlaufen, und die rechten Wandler (16) auf oder in der Nähe von Linien (20) angeordnet sind, die von rechten Ecken (21) zur Mitte (17) der Rückseite (14) des Gehäuses verlaufen, wobei die Wandler (4, 15, 16) symmetrisch angeordnet sind.

6. Surround-Audiosystem (1) nach Anspruch 5, wobei der Satz von Wandlern (4) vier Paare von linken Wandlern (15) und rechten Wandlern (16) umfasst, wobei zwei Paare von linken Wandlern (15) und rechten Wandlern (16) auf oder in der Nähe der Ecken (19, 21) der Rückseite (14) des Gehäuses des Surround-Audiosystems (1) angeordnet sind, und die verbleibenden zwei Paare von linken Wandlern (15) und rechten Wandlern (16) so angeordnet sind, dass die linken Wandler (15) auf oder in der Nähe einer Mitte (22) von Linien (18) angeordnet sind, die von den linken Ecken (19) zur Mitte (17) der Rückseite (14) des Gehäuses verlaufen, und die rechten Wandler (16) auf oder in der Nähe einer Mitte (23) der Linien (20) angeordnet sind, die von den rechten Ecken (21) zur Mitte (17) der Rückseite (14) des Gehäuses verlaufen.

7. Fernsehgerät mit dem Surround-Audiosystem (1) nach einem der Ansprüche 1 bis 6, wobei die Wandler (4) auf dem Gehäuse des Fernsehgerätes angeordnet sind.

8. Verfahren zum Erzeugen eines Audio-Tiefeneffekts durch ein Audio-Surround-System (1), wobei das Audio-Surround-System (1) einen Satz von Wandlern (4) umfasst, die auf einem Gehäuse des Surround-Audiosystems (1) angeordnet sind, wobei der Satz von Wandlern des Wandlers so angeordnet ist, dass er zwei Audiokanäle (5, 6) bildet, einen rechten Audiokanal (5) und einen linken Audiokanal (6), wobei das Verfahren umfasst:
- Bestimmen eines Überlagerungsgrades (25), der für den linken Audiokanal (6) und den rechten Audiokanal (5) erforderlich ist, durch eine Überlagerungsbestimmungseinheit (24), um einen Ton (7) mit dem Audiotiefeneffekt zu erzeugen;
- Steuern einer Signalgeneratoreinheit (2) durch die Überlagerungsbestimmungseinheit (24) zur Erzeugung eines Anregungssignals (3) für den Satz von Wandlern (4), der geeignet ist, den bestimmten Überlagerungsgrad des Tons (7) zu erzeugen;
- Erzeugen und Übertragen des Anregungssignals (3) an den Satz von Wandlern (4) durch den Signalgenerator (2); und
- Empfangen des Anregungssignals (3) durch den Satz von Wandlern (4) und Erzeugen des Tons (7) mit dem bestimmten Überlagerungsgrad, um den Audio-Tiefeneffekt zu erzeugen **gekennzeichnet durch**
- Identifizierung der Frequenz des zu erzeugenden Tons (7) durch eine Frequenzkennung (11);
- basierend auf der Frequenz des Schalls (7), Erzeugen eines Betätigungssignals (12) durch den Frequenzidentifizierer (11) und Senden des Betätigungssignals (12) an ein Heizmodul (8); und
- Empfang des Betätigungssignals (12) durch das Heizmodul (8) und Beheizung des Gehäuses des Surround-Audiosystems (1),
wobei der Satz von Wandlern (4) auf einer Rückseite (14) des Gehäuses des Surround-Audiosystems (1) angeordnet ist,
das Heizmodul einen Satz von Heizelementen (10) umfasst, so dass jedes der Heizelemente (10) in der Nähe jedes der Wandler aus dem Satz von Wandlern (4) angeordnet ist,
und das Heizmodul ist angepasst, um einen Bereich (9) des Gehäuses zu erwärmen, der sich in der Nähe des Satzes von Wandlern befindet, die durch das Anregungssignal (3) angeregt werden sollen.

## Revendications

1. Un système audio surround (1) pour produire un effet de profondeur audio, le système audio surround (1) comprenant :
- un générateur de signal (2) adapté pour générer un signal d'excitation (3) pour un ensemble de transducteurs (4), et adapté pour transmettre en outre le signal d'excitation (3) ; et
- l'ensemble de transducteurs (4) placés sur un boîtier du système audio (1), dans lequel l'ensemble de transducteurs est placé pour former deux canaux audio (5, 6), un canal audio droit (5) et un canal audio gauche (6), dans lequel les transducteurs (4) pour lesquels le signal d'excitation (3) est généré sont adaptés pour recevoir le signal d'excitation (3) et pour générer du son (7) avec l'effet de profondeur audio,
- une unité de détermination de superposition (24) adaptée pour déterminer un degré de superposition (25) requis pour le canal audio gauche (6) et le canal audio droit (5), et sur la base du degré de superposition (25), l'unité de détermination de superposition (24) est adaptée pour commander le générateur de signal (2) afin de générer le signal d'excitation (3) pour l'ensemble de transducteurs appropriés pour générer le degré déterminé de superposition du son,
le système audio surround pour lequel des adaptations supplémentaires sont en cours :
- la commande de l'unité de génération de signal (2) par l'unité de détermination de superposition (24) pour la génération du signal d'excitation (3) pour l'ensemble de transducteurs (4) appropriés pour générer le degré déterminé de superposition du son (7)
- la génération et la transmission du signal d'excitation (3) à l'ensemble des transducteurs par le générateur de signaux (2), et
- recevoir le signal d'excitation (3) par un ensemble de transducteurs et générer le son (7) avec le degré de superposition déterminé pour produire l'effet de profondeur audio,
**caractérisé par** le système audio surround comprenant en outre :
- un module de chauffage (8) pour chauffer le boîtier du système audio surround (1) sur la base d'une fréquence du son à générer,
dans lequel le module de chauffage (8) est adapté pour chauffer une zone (9) du boîtier du système audio surround (1) qui se trouve à proximité de l'ensemble des transducteurs devant être excités par le signal d'excitation (3),
dans lequel le module de chauffage (8) comprend un ensemble d'éléments chauffants (10), de sorte que chacun des éléments chauffants (10) est placé à proximité de chacun des transducteurs de l'ensemble de transducteurs (4),
dans lequel le système audio surround (1) comprend en outre un identificateur de fréquence (11) adapté pour identifier une fréquence du son (7) à générer, et basé sur la fréquence du son, envoyer un signal d'actionnement (12) au module de chauffage (8) pour chauffer le boîtier du système audio surround (1),
et dans lequel l'ensemble des transducteurs (4) sont placés sur une face arrière (14) du boîtier du système audio surround (1).

2. Le système audio surround (1) selon la revendication 1, dans lequel si la fréquence du son (7) à produire est identifiée comme étant une basse fréquence, alors l'identificateur de fréquence (11) est adapté pour envoyer le signal d'actionnement (12) au module de chauffage (8).

3. Le système audio surround (1) selon la revendication 1 ou 2, dans lequel, lorsque l'identificateur de fréquence (11) identifie que la fréquence du son (7) à produire ultérieurement est une haute fréquence, l'identificateur de fréquence (11) est adapté pour envoyer un signal de commande (13) au module de chauffage (8) pour mettre hors service le module de chauffage (8).

4. Le système audio surround (1) selon la revendication 1, dans lequel l'ensemble de transducteurs (4) comprend une paire de transducteur gauche (15) et de transducteur droit (16) placés à proximité immédiate l'un de l'autre au niveau ou à proximité d'un centre (17) de la face arrière (14) du boîtier du système audio surround (1).

5. Le système audio surround (1) selon l'une des revendications 1 ou 4, dans lequel l'ensemble de transducteurs (4) comprend plus d'une paire de transducteurs gauche (15) et de transducteurs droit (16), les transducteurs de gauche (15) sont placés sur ou à proximité de lignes (18) s'étendant des coins gauches (19) au centre (17) de la face arrière (14) du boîtier et les transducteurs de droite (16) sont placés sur ou à proximité de lignes (20) s'étendant des coins droits (21) au centre (17) de la face arrière (14) du boîtier, les transducteurs (4, 15, 16) étant placés symétriquement.

6. Le système audio surround (1) selon la revendication 5, dans lequel le jeu de transducteurs (4) comprend quatre paires de transducteurs de gauche (15) et de droite (16), deux paires de transducteurs de gauche (15) et de droite (16) sont placées sur ou à proximité des coins (19, 21) de la face arrière (14) du boîtier du système audio surround (1), et les deux autres paires de transducteurs de gauche (15) et de droite (16) sont disposées de telle sorte que les transducteurs de gauche (15) sont placés sur ou à proximité d'un milieu (22) de lignes (18) allant des coins de gauche (19) au centre (17) de la face arrière (14) du boîtier et les transducteurs de droite (16) sont placés sur ou à proximité d'un milieu (23) de lignes (20) allant des coins de droite (21) au centre (17) de la face arrière (14) du boîtier.

7. Un téléviseur comprenant le système audio surround (1) selon l'une des revendications 1 à 6, dans lequel les transducteurs (4) sont placés sur le boîtier du téléviseur.

8. Procédé pour générer un effet de profondeur audio par un système audio surround (1), dans lequel le système audio surround (1) comprend un ensemble de transducteurs (4) placés sur un bo tier du système audio surround (1), l'ensemble de transducteurs du transducteur étant placé pour former deux canaux audio (5, 6), un canal audio droit (5) et un canal audio gauche (6), le procédé comprenant :
- la détermination d'un degré de superposition (25) nécessaire pour le canal audio gauche (6) et le canal audio droit (5) par une unité de détermination de superposition (24) pour produire un son (7) avec l'effet de profondeur audio ;
- commander une unité de génération de signal (2) par l'unité de détermination de superposition (24) pour la génération d'un signal d'excitation (3) pour l'ensemble de transducteurs (4) appropriés pour générer le degré de superposition déterminé du son (7) ;
- la génération et la transmission du signal d'excitation (3) à l'ensemble des transducteurs (4) par le générateur de signaux (2) ; et
- recevoir le signal d'excitation (3) par l'ensemble des transducteurs (4) et générer le son (7) avec le degré de superposition déterminé pour produire l'effet de profondeur audio **caractérisé par**
- l'identification de la fréquence du son (7) à générer par un identificateur de fréquence (11) ;
- sur la base de la fréquence du son (7), générer un signal d'actionnement (12) par l'identificateur de fréquence (11), et envoyer le signal d'actionnement (12) à un module de chauffage (8) ; et
- la réception du signal de commande (12) par le module de chauffage (8) et le chauffage du boîtier du système audio surround (1),
dans lequel l'ensemble des transducteurs (4) sont placés sur une face arrière (14) du boîtier du système audio surround (1),
le module de chauffage comprend un ensemble d'éléments chauffants (10), de sorte que chacun des éléments chauffants (10) est placé à proximité de chacun des transducteurs de l'ensemble de transducteurs (4),
et le module de chauffage est adapté pour chauffer une zone (9) du boîtier qui se trouve à proximité de l'ensemble des transducteurs devant être excités par le signal d'excitation (3).
